# EUROPÄISCHE PATENTSCHRIFT

(11) **EP 2 642 164 B1**
(45) Veröffentlichungstag und Bekanntmachung des Hinweises auf die Patenterteilung: **24.08.2016**
(21) Anmeldenummer: 13159103.4
(22) Anmeldetag: 14.03.2013
(51) Int. Cl.: F16H 61/40, B60K 17/356, F16H 61/4043, B60W 10/18, F16H 61/4035

(54) **Hydrostatischer Antrieb**
Hydrostatic drive
Entraînement hydrostatique

(30) Priorität: 22.03.2012 DE 102012005822
(43) Veröffentlichungstag der Anmeldung: 25.09.2013
(73) Patentinhaber: ROBERT BOSCH GMBH, 70442 Stuttgart (DE)
(72) Erfinder: Kuhn, Bernd, 97780 Goessenheim (DE); Beck, Matthias, 89231 Neu-Ulm (DE); Hantke, Patrick, 75417 Muehlacker (DE); Essig, Heinz-Gerhard, 89173 Lonsee (DE); Delissen, Peter, 5927 nk Venlo (NL); Pastuschka, Juergen, 97753 Karlstadt (DE)
(74) Vertreter: Thürer, Andreas

(56) Entgegenhaltungen:
- EP-B1- 0 993 982
- DE-A1-102005 061 991
- DE-A1-102006 016 006
- DE-A1-102008 057 897
- US-A- 3 811 525

## Beschreibung

Die Erfindung betrifft einen hydrostatischen Antrieb gemäß dem Oberbegriff des Patentanspruchs 1.

Derartige hydrostatische Antriebe werden beispielsweise bei Nutzfahrzeugen als Zusatzantrieb für eine Achse, beispielsweise die Vorderräder, verwendet, während die Hinterachse über einen konventionellen mechanischen Antriebsstrang angetrieben ist.

Ein derartiges Nutzfahrzeug mit konventionellem und hydraulischen Antriebsstrang ist beispielsweise in der DE 42 12 983 C2 erläutert. Bei dieser Lösung kann der hydraulische Antriebsstrang bei Bedarf über eine Ventilanordnung zugeschaltet werden, wobei jedem Rad der Vorderachse ein Hydromotor zugeordnet ist. Die Druckmittelversorgung erfolgt über eine Verstellpumpe. Das bekannte System ist darüber hinaus mit einem Retarder ausgeführt, über den die Bremsanlage des Nutzfahrzeugs beim Bremsen hydraulisch unterstützt ist.

In der EP 0 993 982 B1 ist ein Fahrzeug mit einem konventionellen mechanischen Antriebsstrang und einen gattungsgemäßen hydrostatischen Antrieb erläutert. Dabei ist ein Hydromotor beiden Rädern der Vorderachse zugeordnet und in Radialkolbenbauweise ausgeführt. Eine derartige Radialkolbenmaschine hat eine Vielzahl von an einem Hubring abgestützten Kolben, die jeweils einen Arbeitsraum begrenzen, wobei die Arbeitsräume aufeinander folgend mit Hochdruck- und Niederdruck verbunden werden, um den Hydromotor anzutreiben. Beim Abschalten des hydraulischen Antriebsstrangs wird dieser in einen "Free-Wheel-Modus" verstellt, bei dem die Arbeitsräume mit Tankdruck oder einen vergleichsweise niedrigen Druck beaufschlagt sind, während hubring- oder gehäuseseitig ein Speisedruck oder ein sonstiger Druck wirkt, der größer als der Tankdruck ist. Der aus dem höheren Gehäusedruck resultierende Differenzdruck bewirkt ein "Einfahren" der Kolben, so dass diese vom Hubring abheben und somit die Reibung bei abgeschaltetem hydraulischem Antriebsstrang verringert wird.

Bei der Einstellung der Druckdifferenz über den Kolben ist darauf zu achten, dass die in Abheberichtung wirksame Druckdifferenz so groß ist, dass sie die Kolben gegen die bei der Rotation wirkenden Kräfte in der Abhebestellung hält.

In der US 3,811,525 ist ein hydrostatischer Antrieb gezeigt, bei dem jedem Rad ein Hydromotor zugeordnet ist. Auch diese Hydromotoren lassen sich über eine Ventilanordnung in den "Free-Wheel-Modus" umschalten, wobei dann gehäuseseitig der von einer Speisepumpe aufgebrachte Speisedruck und in den Arbeitsräumen der Tankdruck anliegt, so dass die Kolben zur Minimierung der Reibung vom Hubring abheben.

Bei den bekannten Lösungen ist darüber hinaus vorgesehen, den hydrostatischen Antrieb über eine hydraulische Kupplung zuzuschalten, die im "ausgekuppelten Zustand" zwei mit den Anschlüssen der Verstellpumpe verbundene Arbeitsleitungen miteinander verbindet (hydraulischer Bypass). Des Weiteren ist ein Ventil vorgesehen, über das das Gehäuse in der normalen Funktion mit Tankdruck beaufschlagt ist, während im vorbeschriebenen "Free-Wheel-Modus" der Speisedruck aufgeschaltet wird.

Ein all diesen Lösungen gemeinsamer Nachteil besteht darin, dass zum Umschalten auf den "Free-Wheel-Modus" zumindest ein vergleichsweise komplex aufgebautes Sonderventil verwendet werden muss, das bei dem hydrostatischen Antrieb gemäß der US 6,367,572 B1 als 4/3-Wegeventil und beim hydrostatischen Antrieb gemäß der US 3,811,525 als 5/2-Wegeventil ausgeführt ist.

Demgegenüber liegt der Erfindung die Aufgabe zugrunde, einen hydrostatischen Antrieb mit vereinfachtem Aufbau zu schaffen.

Diese Aufgabe wird durch einen hydrostatischen Antrieb mit den Merkmalen des Patentanspruchs 1 gelöst.

Vorteilhafte Weiterbildungen der Erfindung sind Gegenstand der Unteransprüche.

Erfindungsgemäß hat der hydrostatische Antrieb eine Pumpe, zumindest einen Hydromotor, dessen Arbeitsanschlüsse in einem geschlossenen hydraulischen Kreislauf über einen ersten Kreislaufzweig und einen zweiten Kreislaufzweig, von denen in einem ersten Betriebsmodus (aktiver Modus) einer Hochdruck und einer Niederdruck führt, mit Arbeitsanschlüssen der Pumpe verbindbar sind, eine Speisepumpe, von der über eine Speiseleitung, in der der Druck auf einen Niederdruck begrenzt ist, Druckmittel in die Kreislaufzweige einspeisbar ist und eine Ventilanordnung. In einem zweiten Betriebsmodus (Free Wheeling) trennt die Ventilanordnung die Arbeitsanschlüsse von Pumpe und Hydromotor voneinander, verbindet die Arbeitsanschlüsse der Pumpe miteinander und verbindet die Arbeitsanschlüsse des Hydromotors mit einem Tank. In einem dritten Betriebsmodus (Stand-by) trennt die Ventilanordnung die Arbeitsanschlüsse des Hydromotors von Tank und verbindet sie mit den Arbeitsanschlüssen der Pumpe. Außerdem verbindet die Ventilanordnung im dritten Betriebsmodus die beiden Arbeitsanschlüsse der Pumpe miteinander. Im ersten Betriebsmodus trennt die Ventilanordnung die beiden Arbeitsanschlüsse der Pumpe voneinander und die beiden Arbeitsanschlüsse des Hydromotors von Tank. Sie verbindet dann den einen Arbeitsanschluss der Pumpe mit dem einen Arbeitsanschluss des Hydromotors und den anderen Arbeitsanschluss der Pumpe mit dem anderen Arbeitsanschluss des Hydromotors. Erfindungsgemäß ist weist die Ventilanordnung zumindest fünf 2/2 Wegeventile auf, durch deren jeweilige Schaltkonstellation die Betriebsmodi einstellbar sind.

Die 2/2 Wegeventile sind insbesondere 2-Wege-Einbauventile, die auch als Logikventile bezeichnet werden.

Durch die Verwendung von Logikventilen anstelle komplexer Sonderventile kann der vorrichtungstechnische Aufbau der Schaltung deutlich verringert werden, wobei die Verwendung von Logikventilen die Möglichkeit eröffnet, zusätzliche Varianten mit vergleichsweise geringem Aufwand zu realisieren, so dass der hydrostatische Antrieb auf einfache Weise an Sonderwünsche des Kunden angepasst werden kann.

Vorteilhafte Ausgestaltungen eines erfindungsgemäßen hydrostatischen Antriebs finden sich in den Unteransprüchen.

Bei einem Ausführungsbeispiel der Erfindung hat der hydrostatische Antrieb ein Logikventil, das in einer Öffnungsstellung die beiden Kreislaufzweige (oder die Pumpenanschlüsse) in Form eines Bypasses miteinander verbindet. Diesem auch als Clutch-Logikventil benennbare Logikventil ist ein Clutch-Vorsteuerventil zugeordnet, über das ein Federraum des Clutch-Logikventils mit Hochdruck beaufschlagbar oder von Druck entlastbar ist.

Beim hydrostatischen Antrieb kann des Weiteren in jedem Kreislaufzweig ein auch als Engage-Logikventil benennbares Logikventil angeordnet sein, das in einer Öffnungsstellung die Druckmittelverbindung zwischen einem Arbeitsanschluss der Pumpe (10) und dem entsprechenden Arbeitsanschluss des Hydromotors öffnet und in einer Schließstellung diese Druckmittelverbindung absperrt.

Bei einem besonders bevorzugten Ausführungsbeispiel ist beiden Engage-Logikventilen gemeinsam ein Engage-Vorsteuerventil zugeordnet, dessen Druckanschluss mit einer den Speisedruck führenden Leitung verbunden ist und dessen Ausgangsanschluss mit diesem Druckanschluss oder einem mit Tank verbundenen Tankanschluss verbindbar ist, wobei der Ausgangsanschluss mit einem Federraum der Engage-Logikventile.

In einer besonders günstigen Weiterbildung hat der Hydromotor einen zum Innenraum seines Motorgehäuses offenen Gehäuseanschluss, der mit dem Ausgangsanschluss des Engage-Vorsteuerventils verbunden ist.

In der den Speisedruck führenden Leitung kann ein Stromventil, insbesondere eine Düse vorgesehen sein, über die die Druckmittelströmung in Richtung zum Gehäuse des Hydromotors begrenzt ist. Das Stromventil kann auch ein Stromregelventil sein.

Bei einer Weiterbildung der Erfindung ist zwischen dem Logikventil in einem Kreislaufzweig und dem Hydromotor an jeden Kreislaufzweig mit einem ersten Anschluss ein Entlastungslogikventil, auch Unload-Logikventil genannt, angeschlossen, dessen zweiter Anschluss mit Tank verbunden ist. Durch eine Entlastung der Kolben eines Hydromotors zum Tank ist ein Betriebsmodus Free Wheeling realisierbar, in dem die Kolben nicht mehr an einer Hubkurve anliegen. Durch eine gleichzeitige Druckbeaufschlagung der Kolben vom Innenraum des Gehäuses her, werden wird in erhöhtem Maße sichergestellt, dass die Kolben in einer zurückgeschobenen Lage verbleiben.

Durch Schließen dieser Unload-Logikventile erfolgt eine Umschaltung von einem "Free-Wheel-Modus" in einen "Standby"-Modus.

Zur Vereinfachung des schaltungstechnischen Aufwandes ist beiden Unload-Logikventilen ein gemeinsames Unload-Vorsteuerventil zugeordnet.

Bei einem Ausführungsbeispiel der Erfindung verbindet dieses Unload-Vorsteuerventil in einer Grundstellung einen Federraum des Unload-Logikventils mit Tank und in einer Schaltstellung mit dem Kreislaufzweig, der den Hochdruck führt.

Der Hochdruck kann über ein Wechselventil abgegriffen werden.

Der hydrostatische Antrieb kann besonders kompakt ausgeführt sein, wenn die vorbeschriebenen Logikventile und die zugeordneten Vorsteuerventile zu einer baulichen Einheit zusammen gefasst sind. In diese Einheit kann auch ein zur Hochdruckauswahl vorhandenes Wechselventil integriert sein.

Der hydrostatische Antrieb hat eine Speisepumpe, wobei bei einem Ausführungsbeispiel in einer an den Druckanschluss der Speisepumpe angeschlossenen Speiseleitung ein Filter angeordnet ist. Diesem ist ein Druckventil zugeordnet, das von der Druckdifferenz über dem Filter beaufschlagt ist und dessen in Öffnungsrichtung wirksamer Federraum über ein Speisedrucksteuerventil zum Tank entlastbar ist. Über dieses Druckventil wird der Filter vor zu hohen Drücken geschützt, die bei verschmutztem Filter auftreten könnten. Es wird ein Teil des von der Speisepumpe geförderten Öls direkt zur Saugseite der Speisepumpe zurückgeführt werden. Bei einer Entlastung des Federraums wirkt das Druckventil wie ein Druckbegrenzungsventil.

Erfindungsgemäß ist stromabwärts des Filters ein Speisedruckbegrenzungsventil angeordnet, das bei einem höheren Druck zum Tank öffnet als das Druckventil am Filter bei entlastetem Federraum. Durch das Speisedruckbegrenzungsventil ist im normalen Betrieb die Höhe des Niederdrucks festgelegt. Zur Absenkung des Speisedrucks wird das Speisedrucksteuerventil umgeschaltet und dadurch der Federraum des Druckventils am Filter entlastet. Der Speisedruck ist dann nicht mehr zum Beispiel 20 bis 30 bar sondern 5 bis 7 bar.

Eine derartige Schaltung ist aus dem Stand der Technik, beispielsweise der DE 10 2004 057 740 B4 bekannt, so dass weitere Erläuterungen entbehrlich sind.

Bei einem Ausführungsbeispiel der Erfindung ist der hydrostatische Antrieb bei einem Fahrantrieb eines Fahrzeugs vorgesehen, wobei jedem Rad einer Achse ein Hydromotor vorgesehen ist. Die andere Achse wird vorzugsweise in konventioneller Weise über ein mechanisches Getriebe angetrieben.

Ein bevorzugtes Ausführungsbeispiel der Erfindung wird im Folgenden anhand von Zeichnungen näher eriäutert.

Es zeigen:
Figur 1 einen Schaltplan eines erfindungsgemäßen hydrostatischen Antriebs einer Fahrzeugachse,
Figur 2 eine vergrößerte Darstellung der Pumpeneinheit gemäß Figur 1,
Figur 3 eine vergrößerte Darstellung eines Ventilblocks gemäß Figur 1 und
Figur 4 eine vergrößerte Darstellung einer Hydromotoreinheit gemäß Figur 1.

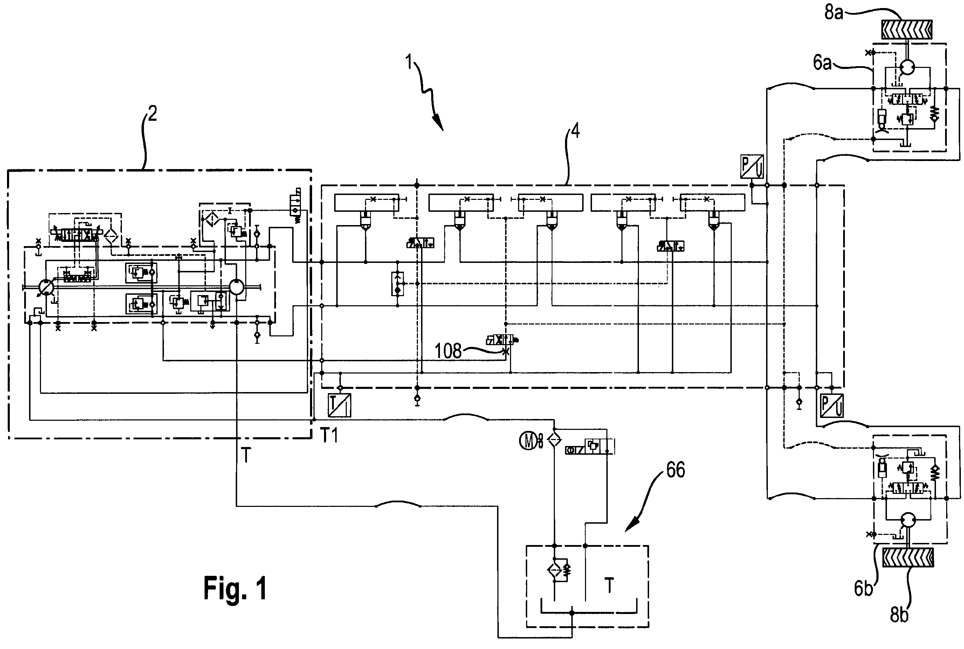

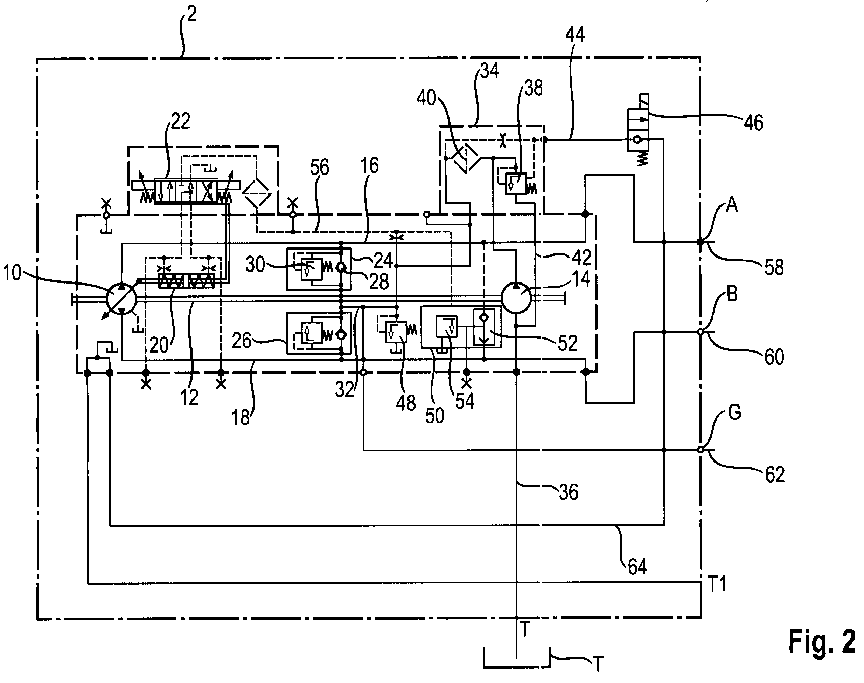

Der erfindungsgemäße hydrostatische Antrieb kann beispielsweise bei einem Lastkraftwagen angewendet werden, dessen Hinterräder über einen konventionellen mechanischen Antriebsstrang mit Verbrennungsmotor, Getriebe, Kardanwelle sowie Differential angetrieben wird. Zusätzlich ist ein hydrostatischer Antrieb vorgesehen, der beispielsweise in schwerem Gelände zugeschaltet werden kann. Gemäß dem in Figur 1 dargestellten Schaltplan hat der hydrostatische Antrieb 1 ein Pumpenaggregat 2, das vom Verbrennungsmotor angetrieben wird. Dieses Pumpenaggregat 2 versorgt über eine Ventilanordnung, im Folgenden Ventilblock 4 genannt, zwei Hydromotoreinheiten 6a, 6b, über die jeweils ein Vorderrad 8a, 8b angetrieben wird. Der in Figur 1 dargestellte hydrostatische Antrieb 1 ist als geschlossener Kreislauf ausgeführt. Die vorgenannten Bauelemente des hydrostatischen Antrieb 1 werden anhand der Figuren 2 bis 4 näher erläutert.

Figur 2 zeigt eine vergrößerte Darstellung des Pumpenaggregats 2 aus Figur 1.

Das Pumpenaggregat 2 hat eine über eine Nullstellung (kurz: über Null) verschwenkbare Verstellpumpe 10, die vom Verbrennungsmotor angetrieben wird. Über eine Nullstellung verschwenkbar bedeutet, dass sich , wie im vorliegenden Fall, die Richtung des Druckmittelflusses durch eine Hydroeinheit in einem Pumpen- oder Motormodus unter Beibehaltung der Drehrichtung einer Triebwelle und unter Wechsel von Hochdruck- und Niederdruckanschluss umkehrt oder dass unter Beibehaltung von Hochdruck- und Niederdruckanschluss und unter Beibehaltung der Drehrichtung einer Triebwelle ein Wechsel zwischen Pumpenbetrieb und Motorbetrieb stattfindet. Der Antrieb erfolgt über eine Antriebswelle 12, die auch eine Speisepumpe 14 antreibt. Über diese wird Druckmittel aus einem Tank T (siehe auch Figur 1) angesaugt und mit einem Speisedruck von beispielsweise 20 bis 30 bar in einen Niederdruckzweig des hydrostatischen Antriebs 1 eingespeist. Bei den folgenden Erläuterungen sei angenommen, dass eine in Figur 2 oben liegende Druckleitung eine Niederdruckleitung 16 ist, während eine mit dem anderen Anschluss der Verstellpumpe 10 verbundene Druckleitung die Hochdruckleitung 18 sein soll. Je nach Förderrichtung der Verstellpumpe 10 können jedoch der Hochdruckzweig und der Niederdruckzweig wechseln.

Die Verstellung des Schwenkwinkels der Verstellpumpe 10 erfolgt mittels eines Stellzylinders 20, der über ein Pumpenregelventil 22 angesteuert wird, das als über eine Regelelektronik angesteuertes Proportionalventil ausgeführt ist. Derartige Druck- und Förderstromregelventile für Verstellpumpen sind aus dem Stand der Technik bekannt, so dass auf eine ausführliche Erläuterung verzichtet werden kann. Dem Pumpenregelventil 22 wird ein Sollwert als elektrische Größe vorgegeben und in Abhängigkeit von der Ansteuerung des Pumpenregelventils 22 ein Stellkolben des Stellzylinders 42 verstellt, wobei dieser mit einer mechanischen oder elektrischen Rückführung ausgeführt ist. Die Lage des Stellkolbens wird mechanisch oder über die Regelelektronik mit dem vorgegebenen Soll-Wert verglichen, der einem bestimmten Hubvolumen entspricht und der Stellkolben wird so lange verstellt, bis der Soll- und Ist-Wert übereinstimmen und somit unter Berücksichtigung der Drehzahl der geforderte Fördervolumenstrom eingestellt ist. Gemäß der angenommenen Förderrichtung der Verstellpumpe 10 wird das Druckmittel in die Hochdruckleitung 18 gefördert und strömt zum Verbraucher, im vorliegenden Fall zu den Hydromotoreinheiten 6a, 6b und in einem geschlossenen Kreislauf über die Niederdruckleitung 16 zum Niederdruckanschluss der Verstellpumpe 10 zurück. Hinsichtlich weiterer Einzelheiten einer derartigen Pumpensteuerung sei beispielsweise auf die DE 10 2004 061 861 B4 verwiesen.

Das Pumpenaggregat 2 hat des Weiteren zwei Speiseventile 24, 26, über die Druckmittel in den jeweiligen Niederdruckzweig eingespeist werden kann. Jedes dieser Speiseventile 24, 26 hat in an sich bekannter Weise jeweils ein zu einer Leitung 16, 18 hin öffnendes Rückschlagventil 28, zu dem ein Druckbegrenzungsventil 30 parallel geschaltet ist, das bei Überschreiten eines vorbestimmten Drucks in der zugeordneten Druckleitung (hier 18) eine Druckmittelverbindung zu jeweils anderen Druckleitung (hier 16) aufsteuert. Hinsichtlich des konkreten Aufbaus derartige Speiseventile 24, 26 kann ebenfalls auf die DE 10 2004 061 861 B4 verwiesen werden.

Die beiden Eingangsanschlüsse der Speiseventile 24, 26 sind an einen Speisekanal 32 angeschlossen, der mit einer Filtereinheit 34 verbunden ist, deren Eingangsanschluss mit dem Druckanschluss der Speisepumpe 14 verbunden ist. Ein Sauganschluss der Speisepumpe 14 ist über einen Tankanschluss T und eine Saugleitung 36 mit dem Tank T verbunden. Über die Speisepumpe 14 wird Druckmittel mit dem Speisedruck (20 bis 30 bar) beaufschlagt und über die Filtereinheit 34 und den Speisekanal 32 zum Eingang der beiden Speiseventile 24, 26 gefördert. Das niederdruckseitige Rückschlagventil 28 öffnet dann, so dass Druckmittel in den entsprechenden Niederdruckzweig gefördert wird. Der Druck im Hochdruckzweig wird über das jeweilige Druckbegrenzungsventil 30 des Speiseventils 24, 26 begrenzt, so dass bei Überschreiten dieses Maximaldrucks der Druck zur Niederdruckseite hin abgebaut werden kann.

Gemäß der Darstellung in Figur 2 ist die Filtereinheit 34 mit einem Druckventil 38 ausgeführt, das vom Druck stromaufwärts eines Filters 40 in Öffnungsrichtung und von Druck stromabwärts des Filters 40 in Schließrichtung beaufschlagt ist. In Schließrichtung wirkt des Weiteren noch eine Feder. Mit zunehmender Verschmutzung steigt der Druckabfall über dem Filter 40 an. Bei einem bestimmten Druckabfall beginnt das Druckventil 38 eine Bypass-Leitung 42 zur Saugleitung 36 aufzusteuern, so dass der Filter vor zu hohen Drücken geschützt ist. Der in Schließrichtung wirksame Druck stromabwärts des Filters 40 wird über einen Steuerkanal 44 abgegriffen, in dem ein Speisedrucksteuerventil 46 angeordnet ist, das über eine Feder in eine Schließstellung vorgespannt ist und über einen Schaltmagneten in eine Öffnungsstellung bringbar ist, in der der Steuerkanal 44 über das Pumpengehäuse zum Tank T hin entlastet ist. Das heißt, durch Schalten des Speisedruckssteuerventils 46 in seine Öffnungsstellung kann die in Schließrichtung wirksame Steuerfläche des Druckventils 38 entlastet werden, so dass dieses als Druckbegrenzungsventil wirkt, das den Druck stromaufwärts des Filters 40 begrenzt. Stromabwärts des Filters 40 ist im Speisekanal 32 ein Speisedruckbegrenzungsventil 48 vorgesehen, das erfindungsgemäß bei einem höheren Druck (beispielsweise 20 bis 30 bar) öffnet als das Differenzdruckventil 38 in der vorbeschriebenen Druckbegrenzungsfunktion. Dieses öffnet dann beispielsweise bei Umschalten des Speisedrucksteuerventils die Druckmittelverbindung zum Tank T bei einem Druck, der unterhalb des Drucks des Speisedruckbegrenzungsventils 48 beispielsweise bei etwa 5 bis 7 bar liegt. Der Speisedruck ist dann entsprechend verringert. Die Funktionsweise und der konkrete Aufbau einer derartigen Filtereinheit 34 mit zwei auf unterschiedliche Werte eingestellten Druckbegrenzungsventilen ist beispielsweise in der DE 10 2004 057 740 B4 erläutert.

Das Pumpenaggregat hat des Weiteren eine Druckabschneideventileinheit 50, über die der Druck im Hochdruckzweig mittels eines Wechselventils 52 abgegriffen und in einen Steuerraum eines Druckabschneideventils 54 geführt wird, das bei Überschreiten eines vorbestimmten Maximaldrucks eine Steuerleitung 56 gedrosselt mit Tank verbindet, so dass die Verstellpumpe 10 in Richtung eines geringeren Fördervolumenstroms verstellt wird. Hinsichtlich weiterer Einzelheiten einer derartigen Druckabschneideventileinheit 50 kann ebenfalls auf die DE 10 2004 061 861 B4 verwiesen werden.

Das Pumpenaggregat 16 hat zwei Arbeitsanschlüsse A, B, die über Arbeitsleitungen 58, 60 mit dem im Folgenden noch näher erläuterten Ventilblock 4 verbunden sind. Das Pumpenaggregat 16 hat des Weiteren einen Speiseanschluss G, der über einen internen Kanal mit dem Speisekanal 32 verbunden ist und an den eine Speiseleitung 62 angeschlossen ist. Die Saugleitung 36 ist über einen Tankanschluss T mit dem Tank T verbunden. Eine an den Ausgang des Speisedrucksteuerventils 46 angeschlossene Leckage-Leitung 64 ist über eine in Figur 1 dargestellte Kühl-/Filtereinheit 66 mit dem Tank T verbunden, so dass aus dem geschlossenen Kreislauf abgezogenes Druckmittel gekühlt und gefiltert wird und dann wieder über die Speisepumpe 14 in den geschlossenen Kreislauf zurück gefördert werden kann.

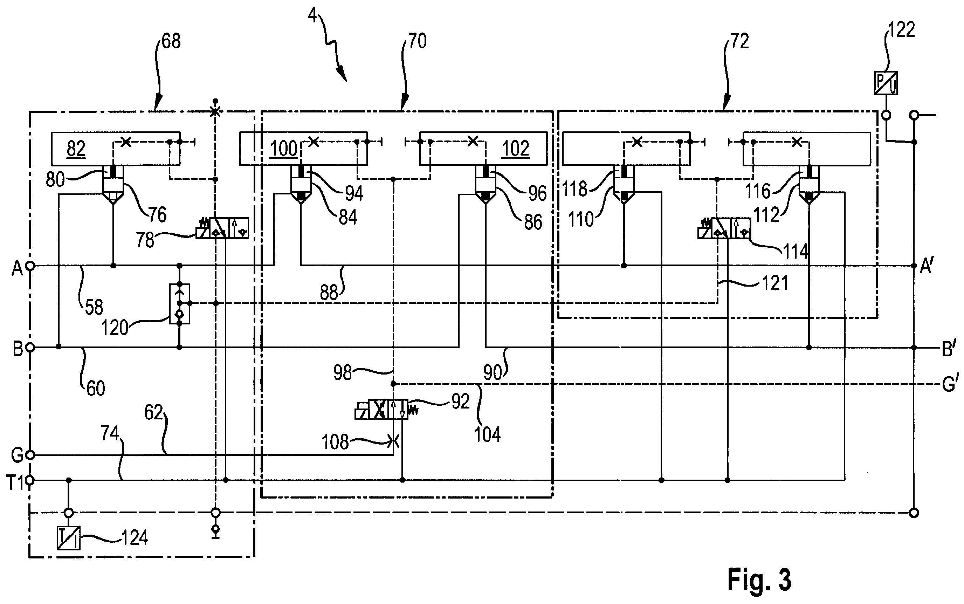

Figur 3 zeigt den Ventilblock gemäß Figur 1 in vergrößerter Darstellung. Dieser setzt sich im Prinzip aus drei Ventileinrichtungen zusammen, die im Folgenden als Clutch-Ventileinrichtung 68, als Engage-Ventileinrichtung 70 und als Unload-Ventileinrichtung 72 bezeichnet werden. Erfindungsgemäß sind diese Ventileinrichtungen im Prinzip durch miteinander verschaltete vorgesteuerte Logikventile ausgebildet, durch die die eingangs beschriebenen Funktionen der Sonderventile beim Stand der Technik realisiert sind.

Gemäß der Darstellung in Figur 3 hat der Ventilblock Anschlüsse A, B, G und T1, die mit den entsprechenden Anschlüssen des Pumpenaggregats 2 verbunden sind. An die beiden Arbeitsanschlüsse A, B sind die vorbeschriebenen Arbeitsleitungen 58, 60 angeschlossen, während der Speiseanschluss G mit der Speiseleitung 62 in Druckmittelverbindung steht. Der Leckage-Anschluss T1 ist mit einem Leckage- oder Rücklaufkanal 74 verbunden.

Die Clutch-Ventileinrichtung 68 hat ein Clutch-Logikventil 76, dessen Anschluss A an die Arbeitsleitung 58 und dessen anderer Anschluss B an die andere Arbeitsleitung 60 angeschlossen ist. Dem Clutch-Logikventil 76 ist ein Clutch-Vorsteuerventil 78 zugeordnet, über das ein Federraum 80 des Clutch-Vorsteuerventils 76, im Folgenden C-Vorsteuerventil genannt, in einer federvorgespannten Grundposition mit dem Rücklaufkanal 74 und in einer bei Ansteuerung eines ziehenden Schaltmagneten eingenommenen Schaltposition mit dem Hochdruckzweig verbindbar ist, so dass dann der Hochdruck im Federraum 80 wirksam ist. Der Hochdruck wird über ein Wechselventil 120 von den Arbeitskanälen 58, 60 abgegriffen. Der Ausgang des C-Vorsteuerventils 78 ist über eine Anschlussplatte 82 des C-Logikventils 76 mit dem Federraum 80 verbunden.

In der dargestellten Grundposition wirkt somit im Federraum 80 der Tankdruck, so dass das C-Logikventil 76 durch den Druck in den Arbeitsleitungen 58, 60, insbesondere durch den gemäß den Vorgaben in der Arbeitsleitung 60 wirksamen Hochdruck in eine Öffnungsstellung gebracht wird und die beiden die Pumpenanschlüsse verbindenden Arbeitsleitungen 58, 60 über das C-Logikventil 76 kurzgeschlossen sind. Die Druckmittelversorgung zu den Hydromotoren ist somit unterbrochen.

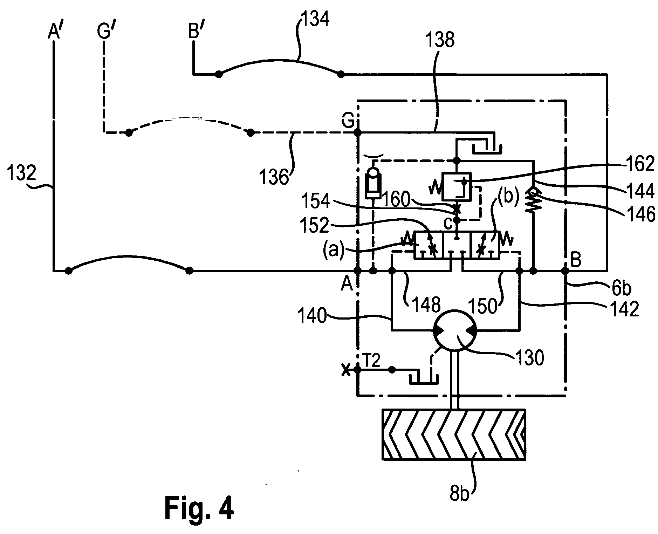

Die Engage-Ventileinrichtung 70 hat zwei Engage-Logikventile 84, 86, im Folgenden E-Logikventile 84, 86 genannt. Die radialen Anschlüsse der E-Logikventile 84, 86 sind an die Arbeitsleitung 58 bzw. 60 angeschlossen. Die beiden anderen Anschlüsse der beiden E-Logikventile 84, 86 münden in einen Arbeitskanal 88 bzw. 90. Beiden Engage-Logikventilen 84, 86 ist ein E-Vorsteuerventil 92 zugeordnet, das im dargestellten Ausführungsbeispiel als 4/2-Wegeventil ausgeführt ist und über eine Feder in eine Öffnungsstellung vorgespannt ist, in der Federräume 94, 96 der E-Logikventile 84 bzw. 86 mit der Speiseleitung 62 verbunden sind, so dass in den Federräumen 94, 96 der Speisedruck wirkt. Durch Umschalten des E-Vorsteuerventils 92 werden die Federräume 94, 96 mit dem Rücklaufkanal 74 verbunden und somit druckentlastet. Der Ausgangsanschluss des E-Vorsteuerventils 92 ist über einen Steuerkanal 98 und Anschlussplatten 100, 102 mit dem jeweiligen Federraum 94 bzw. 96 verbunden. Vom Steuerkanal 98 zweigt ein Kanal 104 ab, der mit einem Gehäuseanschluss G der Hydromotoreinheiten 6a, 6b, (siehe Figur 4) verbunden ist.

Je nach Schaltstellung des E-Vorsteuerventils 92 ist also der Kanal 104 mit der Speiseleitung 62 oder mit dem im Rücklaufkanal 74, in dem Tankdruck herrscht, verbunden.

Im Bereich zwischen dem Anschluss G des Ventilblocks und dem E-Vorsteuerventil 92 ist eine Düse 108 vorgesehen, über die in der dargestellten Grundposition des E-Vorsteuerventils 92 der Druckmittelvolumenstrom zum Gehäuse der Hydromotoreinheiten 6a, 6b begrenzt wird.

In Darstellung gemäß Figur 3 befindet sich die E-Vorsteuerventileinheit 92 in ihrer Grundposition, die sie beim "Free-Wheel-Modus" und in der der Kanal 104 mit der Speiseleitung 62 verbunden ist. Die beiden E-Logikventile 84, 86 werden durch den aktuellen Speisedruck, der auf die große, rückwärtige Steuerfläche und, da das Clutch-Logikventil 76 offen ist, die kleinere, vordere Ringfläche des jeweiligen Logikventils 84, 86 wirkt, in ihrer Schließposition gehalten, so dass die Druckmittelverbindung vom Arbeitskanal 88 zur Arbeitsleitung 58 und vom Arbeitskanal 90 zur Arbeitsleitung 60 unterbrochen ist. Die zentrale vordere Steuerfläche der Logikventil 84, 86 ist im Free Wheeling Modus zum Tank entlastet, wie aus der weiteren Beschreibung noch hervorgehen wird.

Die Unload-Ventileinrichtung 72 hat zwei vorgesteuerte Unload-Logikventile 110, 112 (U-Logikventil), deren axiale Anschlüsse mit dem Arbeitskanal 88 bzw. 90 verbunden ist und deren radiale Ausgangsanschlüsse mit dem Rücklaufkanal 74 verbunden sind. Beiden U-Logikventilen 110, 112 ist gemeinsam ein Unload-Vorsteuerventil 114 zugeordnet, das beim dargestellten Ausführungsbeispiel als 3/2-Wegeventil ausgeführt ist und in seiner federvorgespannten Grundposition die beiden Federräume 116, 118 mit dem Rücklaufkanal 74 verbindet. Durch Umschalten des U-Vorsteuerventils 114 werden die Federräume 116, 118 mit dem Druck im Hochdruckzweig beaufschlagt, der über das Wechselventil 120 an den Arbeitsleitungen 58, 60 abgegriffen wird. Der Ausgang dieses Wechselventils 120 ist über eine HD-Steuerleitung 121 mit dem Eingang des U-Vorsteuerventils 114 verbunden.

Im dargestellten "Free-Wheel-Modus" sind die Federräume 116, 118 in der Grundposition des U-Vorsteuerventils 114 mit dem Rücklaufkanal 74 verbunden und somit druckentlastet. Die U-Logikventile 110, 112 können daher durch den in Öffnungsrichtung wirksamen Druck aufgesteuert werden, so dass die beiden Arbeitskanäle 88, 90 mit dem Tank verbunden sind und somit in den Arbeitsräumen der Hydromotoren entsprechend Tankdruck wirkt, während gehäuseseitig der Speisedruck wirksam ist und somit die Kolben vom Hubring abheben. Der Tankdruck in den Arbeitskanälen 88 und 90 steht auch an den zentralen, vorderen Steuerflächen der E-Logikventile 84, 86 an.

Gemäß den vorstehenden Ausführungen steuert das C-Logikventil 76 einen Bypass zwischen den Arbeitsleitungen 58, 60. Dieses C-Logikventil 76 wird so lange offen gehalten, bis eine hinreichende Synchronisation der konventionell angetriebenen Hinterräder und der Vorderräder gewährleistet ist, um unerwartete Druckspitzen zu vermeiden. Nach dem Schließen des C-Logikventils 76 ist der Kurzschluss zwischen den Arbeitsleitungen 58, 60 aufgehoben, so dass an den Hydromotoren ein Drehmoment wirksam wird. An den Messpunkt MT ist ein Temperatursensor 124 angeordnet, der die Temperatur des Druckmittels im Rücklaufkanal 74 erfasst.

Über die E-Ventileinrichtung 70 wird die Verbindung der Arbeitsleitungen 58, 60 zu den Hydromotoreinheiten 6a, 6b gesteuert. Darüber hinaus steuert die E-Ventileinrichtung 70 den "Free-Wheel-Modus" bei dem die Kolben der Hydromotoren, wie vorstehend erläutert, vom Hubring abheben.

Über die U-Ventileinrichtung 72 wird die Druckmittelverbindung der Hydromotoren zum Tank gesteuert. Die Drücke in den Arbeitskanälen 88, 90 können über Drucksensoren 122 erfasst werden, von denen Figur 1 zwei und in der Darstellung gemäß Figur 3 beispielhaft lediglich einer dargestellt ist.

Die Druckmittelversorgung der Hydromotoreinheiten 6a, 6b erfolgt über die Arbeitsanschlüsse A', B' sowie den Anschluss G', des Ventilblocks 4.

Die Funktion der Hydromotoreinheiten 6a, 6b wird beispielhaft anhand von Figur 4 erläutert, die die Hydromotoreinheit 6b aus Figur 1 zeigt.

Die Hydromotoreinheit 6a hat einen Hydromotor 130, der als nicht verstellbare Hydromaschine ausgeführt ist.

Wie erläutert, ist der Hydromotor beispielsweise als Radialkolbenmaschine, mit einem Radialkolbentriebwerk ausgeführt, wobei eine Vielzahl von Kolben an einem außen liegenden Hubring abgestützt sind. Die Radialkolbenmaschine kann auch mit einem innen liegenden Hubring ausgeführt sein. Da der Aufbau derartiger Radialkolbenmaschinen hinlänglich bekannt ist, kann unter Verweis auf den Stand der Technik auf weitere Erläuterungen verzichtet werden. Die vorbeschriebenen Arbeitsanschlüsse A', B' sind über Anschlussleitungen 132, 134 mit den entsprechenden Anschlüssen A, B der Hydromotoreinheit 6b verbunden. Diese hat des Weiteren einen Gehäuseanschluss G, der über eine Leitung 136 mit dem Anschluss G' des Ventilblocks 4 verbunden ist. Wie bereits vorstehend erläutert, ist an den Gehäuseanschluss G ein Kanal 138 angeschlossen, der sich in den Innenraum des Motorgehäuses öffnet. Das heißt, die Kolben des Radialkolbentriebwerks sind durch den Druck im Kanal 138 in Richtung eines Abhebens vom Hubring beaufschlagt, wie dies in den Figuren 1 und 4 angedeutet ist. Je nach Schaltposition des Engage-Vorsteuerventils 92 kann dieser Druck dem Tankdruck oder einem erhöhten Druck entsprechen. Die beiden Anschlüsse des Hydromotors 130 sind über einen Arbeitskanal 140, 142 mit den Anschlüssen A, B verbunden.

Vom Kanal 138 zweigt ein Freewheelkanal 144 ab, der den Gehäuseinnenraum mit dem Arbeitskanal 142 verbindet. In dem Freewheelkanal 144 ist ein federvorgespanntes Rückschlagventil 146 vorgesehen, dessen Feder einem Druckäquivalent von zum Beispiel 3bar entspricht und das zum Arbeitskanal 142 hin öffnet. Zum Öffnen dieses Rückschlagventils 146 muss der stromaufwärts des Rückschlagventils wirksame Druck um etwa 3 bar höher als der an der Rückseite des Rückschlagventils 146 wirkende Druck sein. Das Rückschlagventil 146 sorgt also dafür dass der Druck im Gehäuseinnenraum nicht unter 3 bar abfällt. Mit diesem Druck werden die Kolben im Free Wheeling Modus in Richtung Einfahren in die Zylinder beaufschlagt.

Von den beiden Arbeitskanälen 140, 142 zweigt jeweils ein Kanal 148, 150 ab, die zu zwei Eingangsanschlüssen eines Spülventils 152 geführt sind.

Dieses ist als 3/3-Wegeventil ausgeführt und hat einen Ausgangsanschluss C, an den ein Verbindungskanal 154 angeschlossen ist, der stromaufwärts des Rückschlagventils 146 in den Freewheelkanal 144 einmündet.

Das Spülventil 152 hat eine federzentrierte Mittelstellung, in der die drei Anschlüsse gegeneinander abgesperrt sind. Der Druck in den Kanälen 148, 150 wird jeweils über Steuerkanäle 156, 158 abgegriffen und zu zwei entgegengesetzt liegenden Steuerflächen des Spülventils geführt, so dass das Spülventil durch die in den Arbeitskanälen 140, 142 wirksame Druckdifferenz in Richtung einer Schaltstellung a oder b verstellt wird. Im Verbindungskanal 154 ist eine Drossel 160 angeordnet. Stromabwärts dieser Drossel 160 ist ein Druckhalteventil 162 vorgesehen, das über eine Feder in eine Sperrstellung vorgespannt ist und das durch den Druck stromaufwärts der Drossel 160 in Richtung einer Öffnungsstellung beaufschlagt ist.

Dieses Druckhalteventil 162 öffnet erst dann, wenn der Druck im Verbindungskanal 154 und somit der niedrigere Druck aus den beiden Arbeitskanälen 140, 142 einen der Feder des Druckhalteventils 162 entsprechenden Schwellwert überschritten hat. Der prinzipielle Aufbau eines derartigen Spülventils ist in der EP 1 443 220 B1 erläutert, wobei bei dieser Variante noch ein Druckabschaltventil vorgesehen ist.

Wie erläutert, ist in der in Figur 1 dargestellten Grundposition des Ventilblocks 4 der "Free-Wheel-Modus" eingestellt. Das heißt, über die C-Ventileinrichtung 68 sind die Arbeitsleitungen 58, 60 kurzgeschlossen. Das E-Vorsteuerventil 92 schaltet den Spelsedruck in das Gehäuse des Hydromotors 130 durch. Die Arbeitsräume des Hydromotors sind über die U-Ventileinrichtung 72 mit dem Tank verbunden. Die Kolben des Hydromotors 130 sind somit im Sinne eines Abhebens vom Hubring beaufschlagt. Das Speicherdrucksteuerventil 46 ist dabei in seine Öffnungsstellung geschaltet, so dass der Speisedruck auf den am Druckventil 38 eingestellten Wert verringert ist.

Wie erläutert, sind die beiden Arbeitskanäle 140, 142 zum Tank T hin entlastet, so dass an der Rückseite des Rückschlagventils 146 der Tankdruck anliegt. Der Druck stromaufwärts des Rückschlagventils wird dem entsprechend auf 3 bar oder genauer gesagt den dem Druckäquivalent der Feder des Rückschlagventils 146 entsprechenden Druck begrenzt. Dieser Druck ist hinreichend, um die Kolben des Hydromotors 130 gegen die Fliehkraft in ihrer eingefahrenen Position zu halten. In diesem "Free-Wheel-Modus" ist die Antriebswelle 12 angetrieben, so dass entsprechend auch der Speisedruck zur Verfügung steht. Die Verstellpumpe 10 kann dabei zurückgefahren werden.

Beim Zuschalten des hydrostatischen Antriebs wird zunächst das E-Vorsteuerventil 92 umgeschaltet, so dass gehäuseseitig der Tankdruck wirksam ist und die Kolben sich wieder an den Hubring anlegen können. Die E-Logikventile 84, 86 öffnen durch die Entlastung im Federraum 94, 96 und aufgrund des in Öffnungsrichtung wirksamen Drucks. Die Anschlüsse A, B des Pumpenaggregats 2 sind dabei jedoch weiterhin über die C-Logikventileinrichtung kurzgeschlossen. In entsprechender Weise sind die Anschlüsse A, B der Hydromotoreinheiten 6a, 6b über die U-Ventileinrichtung 72 mit dem Tank verbunden.

In einer folgenden Sequenz wird dann der Schwenkwinkel der Verstellpumpe 10 so eingestellt, dass der Förderstrom der Pumpe dem Schluckvolumenstrom der beiden Hydromotoreinheiten 6a, 6b plus einer vorbestimmten Schluckvolumenstromdifferenz entspricht. In der Folge wird dann das U-Vorsteuerventil 114 umgeschaltet, so dass die Anschlüsse A, B, der Hydromotoreinheiten 6a, 6b mit den Arbeitskanälen 88, 90 verbunden sind und somit die Hydromotoren an das hydraulische Netz der Pumpe angeschlossen sind. Die endgültige Zuschaltung erfolgt dann durch Umschalten der C-Ventileinrichtung 68 in ihre Sperrstellung.

Das Abschalten des hydrostatischen Antriebs erfolgt dann in entsprechender Weise.

Offenbart ist ein hydrostatischer Antrieb mit einem geschlossenen Kreislauf, wobei zumindest ein Hydromotor über eine Pumpe mit Druckmittel versorgt wird. Die Steuerung der Druckmittelzufuhr und -abfuhr erfolgt über einen im Wesentlichen aus vorgesteuerten Logikventilen gebildeten Ventilblock.

## Patentansprüche

1. Hydrostatischer Antrieb mit einer in ihrem Hubvolumen verstellbaren Pumpe (10), mit zumindest einem Hydromotor (6a, 6b), dessen Arbeitsanschlüsse in einem geschlossenen hydraulischen Kreislauf über einen ersten Kreislaufzweig und einen zweiten Kreislaufzweig, von denen in einem ersten Betriebsmodus einer Hochdruck und einer Niederdruck führt, mit Arbeitsanschlüssen der Pumpe (10) verbindbar sind,
mit einer Speisepumpe (14), von der über eine Speiseleitung (32), in der der Druck auf einen Niederdruck begrenzt ist, Druckmittel in die Kreislaufzweige einspeisbar ist,
und mit einer Ventilanordnung, die in einem zweiten Betriebsmodus (Free Wheeling) die Arbeitsanschlüsse von Pumpe (10) und Hydromotor (6a, 6b) voneinander trennt, die Arbeitsanschlüsse der Pumpe (10) miteinander verbindet und die Arbeitsanschlüsse des Hydromotors (6a, 6b) mit einem Tank verbindet,
die in einem dritten Betriebsmodus (Stand-by) die Arbeitsanschlüsse des Hydromotors von Tank trennt und mit den Arbeitsanschlüssen der Pumpe (10) verbindet und außerdem die beiden Arbeitsanschlüsse der Pumpe (10) miteinander verbindet und die im ersten Betriebsmodus die beiden Arbeitsanschlüsse der Pumpe (10) voneinander und die beiden Arbeitsanschlüsse des Hydromotors (6a, 6b) von Tank trennt und den einen Arbeitsanschluss der Pumpe (10) mit dem einen Arbeitsanschluss des Hydromotors (6a, 6b) und den anderen Arbeitsanschluss der Pumpe (10) mit dem anderen Arbeitsanschluss des Hydromotors (6a, 6b) verbindet, **dadurch gekennzeichnet, dass** die Ventilanordnung zumindest fünf 2/2 Wegeventile hat, durch deren jeweilige Schaltkonstellation die Betriebsmodi einstellbar sind.

2. Hydrostatischer Antrieb nach Patentanspruch 1, wobei die 2/2 Wegeventile 2-Wege-Einbauventile (Logikventile) (76, 84, 86, 110, 112) sind.

3. Hydrostatischer Antrieb nach Patentanspruch 2, wobei ein Logikventil (76) in einer Öffnungsstellung pumpenseitig die beiden Kreislaufzweige miteinander verbindet, wobei ein Federraum (80) des Logikventils (76) über ein Clutch-Vorsteuerventil (78) je nach dessen Schaltstellung mit Hochdruck beaufschlagbar und von Druck entlastbar ist.

4. Hydrostatischer Antrieb nach Patentanspruch 2 oder 3, wobei in jedem Kreislaufzweig ein Logikventil (84, 86) angeordnet ist, das in einer Öffnungsstellung die Druckmittelverbindung zwischen einem Arbeitsanschluss der Pumpe (10) und dem entsprechenden Arbeitsanschluss des Hydromotors (130) öffnet.

5. Hydrostatischer Antrieb nach Patentanspruch 4, wobei beiden Logikventilen (84, 86) in den Kreislaufzweigen gemeinsam ein Engage-Vorsteuerventil (92) zugeordnet ist, dessen Druckanschluss mit einer den Speisedruck führenden Leitung und dessen Ausgangsanschluss mit dem Druckanschluss oder einem Tankanschluss verbindbar ist, wobei der Ausgangsanschluss des Engage-Vorsteuerventils (92) mit den Federräumen (94, 96) der Logikventile (84, 86) in den Kreislautzweigen verbunden ist.

6. Hydrostatischer Antrieb nach Patentanspruch 5, wobei der Hydromotor (6a, 6b) einen zum Innenraum seines Motorgehäuses offenen Gehäuseanschluss hat, der mit dem Ausgangsanschluss des Engage-Vorsteuerventils (92) verbunden ist.

7. Hydrostatischer Antrieb nach Patentanspruch 5 oder 6, wobei in der den Speisedruck führenden Leitung ein Stromventil (108) angeordnet ist.

8. Hydrostatischer Antrieb nach einem der vorhergehenden Patentansprüche, wobei zwischen dem Logikventil (84, 86) in einem Kreislaufzweig und dem Hydromotor (6a, 6b) an jeden Kreislaufzweig mit einem ersten Anschluss ein Entlastungslogikventil (Unload-Logikventil) (110, 112) angeschlossen ist, dessen zweiter Anschluss mit Tank verbunden ist.

9. Hydrostatischer Antrieb nach Patentanspruch 7, wobei die beiden Entlastungslogikventile (110, 112) über ein gemeinsames Unload-Vorsteuerventil (114) ansteuerbar sind.

10. Hydrostatischer Antrieb nach Patentanspruch 9, wobei das Unload-Vorsteuerventil (114) in einer Grundstellung einen Federraum (116, 118) der Entlastungslogikventile (110, 112) mit Tank und in einer Schaltstellung mit Hochdruck beaufschlagt.

11. Hydrostatischer Antrieb nach einem vorhergehenden Patentanspruch, wobei ein Wechselventil (120) vorhanden ist, über das ein Vorsteuerventil (78, 114) mit dem den Hochdruck führenden Kreislaufzweig verbunden wird.

12. Hydrostatischer Antrieb nach einem vorhergehenden Patentanspruch, wobei die Logikventile (76, 84, 86, 110, 116) und die zugeordneten Vorsteuerventile (78, 92, 114) zu einer baulichen Einheit zusammengefasst sind.

13. Hydrostatischer Antrieb nach einem vorhergehenden Patentanspruch, wobei in der an den Druckanschluss der Speisepumpe (14)angeschlossenen Speiseleitung (32) ein Filter (40) angeordnet ist, dem ein Druckventil (38) zugeordnet ist, das von der Druckdifferenz über dem Filter (40) beaufschlagt ist und dessen in Öffnungsrichtung wirksamer Federraum über ein Speisedrucksteuerventil (46) zum Tank entlastbar ist.

14. Hydrostatischer Antrieb nach Patentanspruch 13, wobei stromabwärts des Filters (40) ein Speisedruckbegrenzungsventil (48) angeordnet ist, das bei einem höheren Druck zum Tank öffnet als das Druckventil (38) bei entlastetem Federraum.

15. Hydrostatischer Antrieb nach einem vorhergehenden Patentanspruch, wobei dieser ein Fahrantrieb für eine Fahrzeugachse ist, bei der jedem Rad (8) ein Hydromotor zugeordnet ist.

16. Hydrostatischer Antrieb nach Patentanspruch 15, mit einem konventionellen Antrieb für die andere Achse.

## Claims

1. Hydrostatic drive having a pump (10) with an adjustable swept volume, having at least one hydraulic motor (6a, 6b), the working connectors of which can be connected in a closed hydraulic circuit via a first circuit branch and a second circuit branch, of which one conducts high pressure and one conducts low pressure in a first operating mode, to working connectors of the pump (10), having a feed pump (14), by which pressure medium can be fed into the circuit branches via a feed line (32), in which the pressure is limited to a low pressure, and having a valve arrangement which, in a second operating mode (freewheeling), disconnects the working connectors of the pump (10) and the hydraulic motor (6a, 6b) from one another, connects the working connectors of the pump (10) to one another and connects the working connectors of the hydraulic motor (6a, 6b) to a tank, which valve arrangement, in a third operating mode (standby), disconnects the working connectors of the hydraulic motor from the tank and connects them to the working connectors of the pump (10) and, moreover, connects the two working connectors of the pump (10) to one another, and which valve arrangement, in the first operating mode, disconnects the two working connectors of the pump (10) from one another and disconnects the two working connectors of the hydraulic motor (6a, 6b) from the tank, and connects the one working connector of the pump (10) to the one working connector of the hydraulic motor (6a, 6b) and connects the other working connector of the pump (10) to the other working connector of the hydraulic motor (6a, 6b), **characterized in that** the valve arrangement has at least five 2/2-way valves, by way of the respective switching constellation of which the operating modes can be set.

2. Hydrostatic drive according to Patent Claim 1, the 2/2-way valves being 2-way cartridge valves (logic valves) (76, 84, 86, 110, 112).

3. Hydrostatic drive according to Patent Claim 2, a logic valve (76) connecting the two circuit branches to one another on the pump side in an open position, it being possible for a spring space (80) of the logic valve (76) to be loaded with high pressure and to be relieved of pressure via a clutch pilot valve (78) depending on its switching position.

4. Hydrostatic drive according to Patent Claim 2 or 3, a logic valve (84, 86) being arranged in each circuit branch, which logic valve (84, 86) opens the pressure medium connection between a working connector of the pump (10) and the corresponding working connector of the hydraulic motor (130) in an open position.

5. Hydrostatic drive according to Patent Claim 4, the two logic valves (84, 86) in the circuit branches being jointly assigned an engage pilot valve (92), the pressure connector of which can be connected to a line which conducts the feed pressure and the output connector of which can be connected to the pressure connector or a tank connector, the output connector of the engage pilot valve (92) being connected to the spring spaces (94, 96) of the logic valves (84, 86) in the circuit branches.

6. Hydrostatic drive according to Patent Claim 5, the hydraulic motor (6a, 6b) having a housing connector which is open towards the interior space of its motor housing and is connected to the output connector of the engage pilot valve (92).

7. Hydrostatic drive according to Patent Claim 5 or 6, a flow control valve (108) being arranged in the line which conducts the feed pressure.

8. Hydrostatic drive according to one of the preceding patent claims, a relief logic valve (unload logic valve) (110, 112) being connected with a first connector to each circuit branch between the logic valve (84, 86) in a circuit branch and the hydraulic motor (6a, 6b), the second connector of which relief logic valve (110, 112) is connected to the tank.

9. Hydrostatic drive according to Patent Claim 7, it being possible for the two relief logic valves (110, 112) to be actuated via a common unload pilot valve (114).

10. Hydrostatic drive according to Patent Claim 9, the unload pilot valve (114) loading a spring space (116, 118) of the relief logic valves (110, 112) with the tank in a basic position and loading the said spring space (116, 118) with high pressure in a switched position.

11. Hydrostatic drive according to a preceding patent claim, there being a shuttle valve (120), via which a pilot valve (78, 114) is connected to the circuit branch which conducts the high pressure.

12. Hydrostatic drive according to a preceding patent claim, the logic valves (76, 84, 86, 110, 116) and the associated pilot valves (78, 92, 114) being combined to form one structural unit.

13. Hydrostatic drive according to a preceding patent claim, a filter (40) being arranged in the feed line (32) which is connected to the pressure connector of the feed pump (14), which filter (40) is assigned a pressure valve (38) which is loaded by the pressure difference across the filter (40) and the spring space of which, which acts in the opening direction, can be relieved to the tank via a feed pressure control valve (46).

14. Hydrostatic drive according to Patent Claim 13, a feed pressure limiting valve (48) being arranged downstream of the filter (40), which feed pressure limiting valve (48) opens at a higher pressure to the tank than the pressure valve (38) in the case of a relieved spring space.

15. Hydrostatic drive according to a preceding patent claim, said hydrostatic drive being a traction drive for a vehicle axle, in the case of which each wheel (8) is assigned a hydraulic motor.

16. Hydrostatic drive according to Patent Claim 15, having a conventional drive for the other axle.

## Revendications

1. Entraînement hydrostatique comprenant une pompe (10) de volume de travail variable, comprenant au moins un moteur hydraulique (6a, 6b) dont les raccords de travail peuvent être connectés à des raccords de travail de la pompe (10) dans un circuit hydraulique fermé par le biais d'une première branche de circuit et d'une deuxième branche de circuit, qui conduisent, dans un premier mode de fonctionnement, une pression élevée et une basse pression,
comprenant une pompe d'alimentation (14) depuis laquelle du fluide peut être injecté dans les branches du circuit par le biais d'une conduite d'alimentation (32) dans laquelle la pression est limitée à une basse pression, et comprenant un agencement de soupapes qui, dans un deuxième mode de fonctionnement (Free Wheeling, ou de roue libre), sépare l'un de l'autre les raccords de travail de la pompe (10) et du moteur hydraulique (6a, 6b), relie l'un à l'autre les raccords de travail de la pompe (10) et relie les raccords de travail du moteur hydraulique (6a, 6b) à un réservoir,
qui, dans un troisième mode de fonctionnement, (Stand-by, ou de veille) sépare les raccords de travail du moteur hydraulique du réservoir et les relie aux raccords de travail de la pompe (10) et en outre relie l'un à l'autre les deux raccords de travail de la pompe (10) et, dans le premier mode de fonctionnement, sépare l'un de l'autre les deux raccords de travail de la pompe (10) et sépare les deux raccords de travail du moteur hydraulique (6a, 6b) du réservoir et relie l'un des raccords de travail de la pompe (10) à un raccord de travail du moteur hydraulique (6a, 6b) et l'autre raccord de travail de la pompe (10) à l'autre raccord de travail du moteur hydraulique (6a, 6b), **caractérisé en ce que** l'agencement de soupape présente au moins cinq soupapes à 2/2 voies qui, par leur constellation de branchement respective, permettent d'ajuster les modes de fonctionnement.

2. Entraînement hydrostatique selon la revendication 1, dans lequel les soupapes à 2/2 voies sont des soupapes intégrées à 2 voies (soupapes logiques) (76, 84, 86, 110, 112).

3. Entraînement hydrostatique selon la revendication 2, dans lequel une soupape logique (76) relie l'une à l'autre les deux branches de circuit du côté de la pompe dans une position d'ouverture, un espace de ressort (80) de la soupape logique (76) pouvant être sollicité avec une pression élevée et pouvant être détendu en pression par le biais d'une soupape pilote à embrayage (78) en fonction de sa position de commutation.

4. Entraînement hydrostatique selon la revendication 2 ou 3, dans lequel, dans chaque branche de circuit, est disposée une soupape logique (84, 86) qui, dans une position d'ouverture, ouvre la liaison de fluide sous pression entre un raccord de travail de la pompe (10) et le raccord de travail correspondant du moteur hydraulique (130).

5. Entraînement hydrostatique selon la revendication 4, dans lequel une soupape pilote d'engagement (92) est associée en commun aux deux soupapes logiques (84, 86) dans les branches de circuit, son raccord de pression pouvant être connecté à une conduite conduisant la pression d'alimentation et son raccord de sortie pouvant être connecté au raccord de pression ou à un raccord de réservoir, le raccord de sortie de la soupape pilote d'engagement (92) étant connecté aux espaces de ressort (94, 96) des soupapes logiques (84, 86) dans les branches de circuit.

6. Entraînement hydrostatique selon la revendication 5, dans lequel le moteur hydraulique (6a, 6b) présente un raccord de boîtier ouvert vers l'espace interne de son boîtier de moteur, qui est connecté au raccord de sortie de la soupape pilote d'engagement (92).

7. Entraînement hydrostatique selon la revendication 5 ou 6, dans lequel une valve de débit (108) est disposée dans la conduite conduisant la pression d'alimentation.

8. Entraînement hydrostatique selon l'une quelconque des revendications précédentes, dans lequel une soupape logique de décharge (soupape logique Unload) (110, 112) est raccordée par un premier raccord entre la soupape logique (84, 86) dans une branche de circuit et le moteur hydraulique (6a, 6b) au niveau de chaque branche de circuit, et son deuxième raccord est connecté au réservoir.

9. Entraînement hydrostatique selon la revendication 7, dans lequel les deux soupapes logiques de décharge (110, 112) peuvent être commandées par le biais d'une soupape pilote de décharge commune (114).

10. Entraînement hydrostatique selon la revendication 9, dans lequel la soupape pilote de décharge (114) sollicite un espace de ressort (116, 118) des soupapes logiques de décharge (110, 112) avec le réservoir dans une position de base, et avec la pression élevée dans une position de commutation.

11. Entraînement hydrostatique selon l'une quelconque des revendications précédentes, dans lequel une soupape d'échange (120) est prévue, par le biais de laquelle une soupape pilote (78, 114) est connectée à la branche de circuit conduisant la pression élevée.

12. Entraînement hydrostatique selon l'une quelconque des revendications précédentes, dans lequel les soupapes logiques (76, 84, 86, 110, 116) et les soupapes pilotes associées (78, 92, 114) sont réunies en une unité structurelle.

13. Entraînement hydrostatique selon l'une quelconque des revendications précédentes, dans lequel, dans la conduite d'alimentation (32) raccordée au raccord de pression de la pompe d'alimentation (14), est disposé un filtre (40) auquel est associée une soupape de pression (38) qui est sollicitée par la différence de pression en travers du filtre (40) et dont l'espace de ressort agissant dans la direction d'ouverture peut être déchargé vers le réservoir par le biais d'une soupape de commande de pression d'alimentation (46).

14. Entraînement hydrostatique selon la revendication 13, dans lequel, en aval du filtre (40) est disposée une soupape de limitation de la pression d'alimentation (48) qui s'ouvre vers le réservoir en cas de pression supérieure à celle de la soupape de pression (38) lorsque l'espace de ressort est déchargé.

15. Entraînement hydrostatique selon l'une quelconque des revendications précédentes, dans lequel celui-ci est un entraînement de conduite pour un essieu de véhicule, dans lequel un moteur hydraulique est associé à chaque roue (8).

16. Entraînement hydrostatique selon la revendication 15, comprenant un entraînement conventionnel pour l'autre essieu.
